# EUROPÄISCHE PATENTSCHRIFT

(11) **EP 2 454 035 B1**
(45) Veröffentlichungstag und Bekanntmachung des Hinweises auf die Patenterteilung: **24.07.2013**
(21) Anmeldenummer: 11748674.6
(22) Anmeldetag: 26.08.2011
(51) Int. Cl.: B21D 28/26, B21D 43/28

(54) **VERFAHREN ZUM BEARBEITEN EINES WERKSTÜCKS AN EINER WERKZEUGMASCHINE**
METHOD FOR MACHINING A WORKPIECE ON A MACHINE TOOL
PROCÉDÉ D'USINAGE D'UNE PIÈCE SUR UNE MACHINE-OUTIL

(30) Priorität: 31.08.2010 DE 102010040006
(43) Veröffentlichungstag der Anmeldung: 23.05.2012
(73) Patentinhaber: TRUMPF Werkzeugmaschinen GmbH + Co. KG, 71254 Ditzingen (DE)
(72) Erfinder: BÜTTNER, Stefan, 71706 Markgröningen (DE); LAIB, Wolfgang, 74354 Besigheim (DE); SPAGNUOLO, Ignazio, 71229 Höfingen (DE)
(74) Vertreter: Kohler Schmid Möbus
(86) Internationale Anmeldenummer: PCT/EP2011/064711
(87) Internationale Veröffentlichungsnummer: WO 2012/028549

(56) Entgegenhaltungen:
- EP-A1- 2 184 116
- EP-A1- 2 184 118
- EP-A2- 2 209 053
- DE-A1-102005 012 742
- US-A1- 2009 084 236

## Beschreibung

Die Erfindung betrifft ein Verfahren zum Bearbeiten eines Werkstücks, insbesondere einer Blechtafel, an einer Werkzeugmaschine sowie ein zugehöriges Computerprogrammprodukt.

Aus dem Stand der Technik ist die Software "CalcuMax" von Megatech Software GmbH bekannt. Dieses ist in der Lage, parallel zu den üblichen CAD/CAM-Programmiersystemen zu arbeiten, und dient dazu, einen Produktionsplan zu erstellen und vollautomatisch Produktionskosten für Teile zu errechnen, die durch Laser-, Plasma-, Brenn- oder Wasserstrahlschneiden hergestellt werden. CalcuMax verfügt über eine Materialverwaltung, bei der für diese Kostenrechnung auch Schrott- und Restmaterialien berücksichtigt werden. Die Bediener der Werkzeugmaschinen können die verwendeten Materialmengen für die jeweiligen Aufträge an CalcuMax zurückmelden, so dass für die Nachkalkulation der exakten Kosten auch ein zusätzlicher Materialverbrauch, beispielsweise für das Einfahren der Maschinen oder die Nachproduktion, berücksichtigt wird.

Die Mitarbeiter in der Maschinenhalle und die Werkzeugmaschine sind jedoch nicht in die Berechnungen von Schrott- und Gutteilgewichten und -volumen oder daraus folgende Kostenrechnungen einbezogen. Dadurch ist es beispielsweise schwierig oder unmöglich für einen Mitarbeiter einzuschätzen, welche Schrott- oder Gutteilmengen in welchem Zeitraum anfallen werden und wann folglich Behälter mit dem anfallenden Schrott oder mit den anfallenden Gutteilen vollständig gefüllt und daher zu wechseln sind, wann maximal zulässige Gewichte für Transportmittel erreicht sind und wie hoch das aktuelle Gewicht des sich in Bearbeitung befindenden Werkstücks ist. Dadurch hat der Mitarbeiter in der Maschinenhalle auch keinen Überblick über die angefallenen Schrottmengen, die er gegebenenfalls an Entsorgungsfirmen übergibt, und muss sich bei der hierfür fälligen Vergütung auf die Entsorgungsfirmen verlassen, wenn ihm keine weitere Möglichkeit zur Gewichtsbestimmung zur Verfügung steht.

Des Weiteren ist es besonders bei dicken Blechen notwendig, die Dynamik der Werkzeugmaschinenbearbeitung herabzusetzen, da mit steigendem Werkstückgewicht die jeweils zulässige Höchstgeschwindigkeit bzw. Höchstbeschleunigung abnimmt.

Aus der DE 10 2005 012 742 A1 ist eine Überwachungsvorrichtung für die Großproduktion von Bauteilen, insbesondere im Automobilbereich, bekannt, die eine Überwachungseinrichtung zur Überwachung des Fertigungsprozesses, beispielsweise eines Schweißprozesses, sowie eine damit verbundene Steuereinrichtung aufweist. Mit einem Fertigteil-Aufnahmebehälter und der Steuereinrichtung ist eine Detektionseinrichtung, wie z.B. eine Lichtschranke, zum Feststellen einer Teilezufuhr in den Fertigteil-Aufnahmebehälter verbunden. Durch die Steuereinrichtung erfolgt ein Sperren des gesamten Fertigteil-Aufnahmebehälters, sobald die Überwachungseinrichtung einen Fertigungsfehler meldet und das Fehlteil in den Fertigteil-Aufnahmebehälter gelangt ist oder sobald eine Soll-Anzahl verketteter Arbeitsfolgen unterschritten wird und das Fehlteil in den Fertigteil-Aufnahmebehälter gelangt ist oder sobald sich die Anzahl der gefertigten Teile von derjenigen in den Fertigteil-Aufnahmebehälter gelangten Teile unterscheidet.

Aus der EP 2 209 053 A2 ist ein Bearbeitungszentrum zum Fräsen und Bohren von Werkstücken mit unterschiedlichem Werkstückgewicht bekannt. Das Bearbeitungszentrum umfasst eine werkstücktragende und eine werkzeugtragende Baugruppe, wobei die werkstücktragende Baugruppe mindestens eine direkt angetriebene Vorschubachse besitzt, eine CNC-Werkzeugmaschinensteuerung mit einem Interpolator mit einer Vorschubregelung und einem Leistungsteil zum Steuern und Regeln eines Antriebsmotors für die direkt angetriebene Vorschubachse. Um eine optimale Anpassung der Vorschubbewegung an den jeweiligen Bearbeitungsvorgang automatisiert zu ermöglichen, ist vorgesehen, dass die Vorschubregelung ein Aufnahmemittel besitzt, um über einen vordefinierten Messlauf den Ist-Wert der Stromaufnahme des Antriebsmotors der Vorschubachse im beliebig beladenen Zustand aufnehmen zu können, dass die Vorschubregelung eine Berechnungseinheit besitzt, um über den Ist-Wert der Stromaufnahme des Antriebsmotors die tatsächliche Motorauslastung bestimmten zu können, und dass die CNC-Werkzeugmaschinensteuerung eine Berechungseinheit besitzt, um mit Hilfe eines weiteren Aufnahmemittels die tatsächliche Motorauslastung in die Berechungseinheit einlesen und dann über die tatsächliche Motorauslastung, die tatsächliche Massenträgheit und davon abhängig die Optimierungswerte zum Steuern und Regeln des Antriebsmotors berechen zu können, die dann an den Interpolator und an die Vorschubregelung ausgeben werden.

Die Aufgabe der Erfindung besteht darin, die Handhabung einer Werkzeugmaschine während der Bearbeitung des Werkstücks weiter zu optimieren.

Die Aufgabe wird efindungsgsmäß durch ein Verfahren mit den Merkmalen von Anspruch 1 gelöst.

Vorzugsweise wird während der Bearbeitung des Werkstücks dessen Dynamik - also die Geschwindigkeit und/oder Beschleunigung, mit der das Werkstück bewegt wird - an das während der Bearbeitung abnehmende Werkstückgewicht angepasst. Da bei hohen zu bewegenden Werkstückgewichten die Höchstgeschwindigkeit und/oder Höchstbeschleunigung der Werkzeugmaschine auf Grund der Werkstückträgerbelastung herabgesetzt ist, werden bisher besonders dicke Bleche während der gesamten Bearbeitung mit einer reduzierten Geschwindigkeit und/oder Beschleunigung abgearbeitet. In Abhängigkeit der bei der Bearbeitung abgeführten Abfall- und Gutteilmenge kann die jeweils zulässige Höchstgeschwindigkeit und/oder -beschleunigung entsprechend dem abnehmenden Werkstückgewicht bestimmt und die Dynamik des Werkstücks demgemäß während der Bearbeitung erhöht werden.

Erfindungsgemäß wird während der Bearbeitung des Werkstücks ein den Wechsel mindestens eines Abfall- oder Gutteilebehälters der Werkzeugmaschine veranlassender Steuerparameter an die während der Bearbeitung ansteigende Abfall- oder Gutteilemenge angepasst. In Abhängigkeit der bei der Bearbeitung abgeführten Abfall- und Gutteilmenge kann der Wechsel von Abfall- oder Gutteilebehältern passend durchgeführt werden - entweder automatisiert oder durch Hinweis an den Bediener, dass seit dem letzten Behälterwechsel die maximal zulässige Abfall- bzw. Gutteilmenge angefallen ist. Es ist auch möglich, bereits vor dem Wechsel vorausschauend eine Warnung an den Bediener auszugeben, wann der nächste Wechsel notwendig sein wird. Dazu kann dem Bediener beispielsweise die zum Wechsel des Abfallbehälters noch verbleibende Zeit angezeigt werden.

In einer bevorzugten Verfahrensvariante.ist vorgesehen, dass die bei der Bearbeitung von Werkstücken anfallenden Abfallteile jeweils nach unterschiedlichen Abfallarten sortiert in unterschiedliche Abfallbehälter abgeführt werden und dass während der Bearbeitung der Werkstücke die jeweils einen Wechsel der Abfallbehälter veranlassenden Steuerparameter an die während der Bearbeitung der Werkstücke jeweils abgeführte Abfallmenge angepasst wird. Somit ist es möglich, die angefallenen Abfallmengen materialabhängig sehr genau zu schätzen und entsprechend die hierfür zu erwartenden Vergütungen zu berechnen. Dies ermöglicht es dem Bediener, Fehler bei der Schrottvergütung frühzeitig zu erkennen. Auch eine Sortierung nach Gutteilearten und ein entsprechender Gutteilebehälterwechsel sind möglich. Im Gegensatz zur Abfallmenge, bei der im Allgemeinen nur Gewicht oder Volumen relevant sind, kann es bei Gutteilen zur Kommissionierung zusätzlich sinnvoll sein, die Anzahl der verschiedenen Gutteilearten mitzuverfolgen.

Erfindungsgemäß wird der zeitliche Verlauf der im Laufe der Bearbeitung des Werkstücks anfallenden Abfall- und/oder Gutteilemenge bereits vor der eigentlichen Bearbeitung ermittelt und im zugehörigen NC-Programm hinterlegt und der mindestens eine Steuerungsparameter an der Werkzeugmaschine entsprechend der hinterlegten Abfall- und/oder Gutteilmenge angepasst wird. Im NC-Programm wird die Menge (z.B. als Gewicht, Fläche, Anzahl oder Volumen) von Gut- und/oder Abfallteilen hinterlegt, so dass die Werkzeugmaschine daraus dann die jeweils zulässigen Höchstgeschwindigkeiten/-beschleunigungen sowie die anstehenden Behälterwechsel berechnen kann. Das NC-Programm ist somit nicht festgelegt auf eine spezielle Werkzeugmaschine mit bestimmten Höchstgeschwindigkeiten/-beschleunigungen oder Behältern. So kann es nicht passieren, dass ein für eine Werkzeugmaschine geschriebenes NC-Programm auf einer anderen Werkzeugmaschine produziert wird und dabei dann beispielsweise eine zu hohe Dynamik eingestellt ist, die zur Produktion von Ausschuss führt, oder dass vom NC-Programm Behälterwechsel verlangt werden, obwohl es die angeforderten Behälter an dieser Werkzeugmaschine nicht gibt. Außerdem kann der Programmierer am CAD/CAM-Rechner im Allgemeinen den aktuellen Füllstand der Behälter an der Werkzeugmaschine nicht kennen und daher auch den Zeitpunkt des Behälterwechsels nicht festlegen, zumal erschwerend hinzukommt, dass das NC-Programm eventuell erst Stunden nach der Erstellung an der Werkzeugmaschine produziert wird. Die notwendigen Berechnungen, um den zeitlichen Verlauf der im Laufe der Bearbeitung des Werkstücks anfallenden Abfall- und/oder Gutteilemenge zu ermitteln, werden auf der NCU-Baugruppe der Werkzeugmaschine (oder auf einem Steuerungscomputer, der dann Informationen aus der NCU-Baugruppe auslesen müsste) durchgeführt.

Die Erfindung betrifft auch ein Computerprogrammprodukt, welches Codemittel aufweist, die zum Durchführen aller Schritte des oben beschriebenen Verfahrens angepasst sind, wenn das Programm auf einer Datenverarbeitungsanlage abläuft.

Weitere Vorteile der Erfindung ergeben sich aus der Beschreibung und der Zeichnung. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte numerische Steuerungsvorrichtung einer Werkzeugmaschine;
- Fig. 2: eine Stanz-Kombi-Werkzeugmaschine nach dem Stand der Technik;
- Fig. 3: eine numerische Steuerungsvorrichtung einer Werkzeugmaschine mit erfindungsgemäßen Programmmodulen;
- Fig. 4: ein erstes Beispiel des erfindungsgemäßen Verfahrens; und
- Fig. 5: ein zweites Beispiel des erfindungsgemäßen Verfahrens.

Die Steuerung von Werkzeugmaschinen erfolgt mit Hilfe numerischer Steuerungen, die im Allgemeinen in drei Steuereinheiten, ein MMC-Bediensystem (Man Machine Communication) als Dateneingabe- und Visualisierungseinheit, eine SPS-Steuereinheit (speicherprogrammierbare Steuerung) und eine NC-Steuereinheit, aufgeteilt sind. Daten und Steuerbefehle werden über das MMC-Bediensystem eingegeben, an die NC-Steuereinheit weitergeleitet, in der NC-Steuereinheit decodiert und nach geometrischen und technologischen Daten (NC-Steuereinheit) und Schaltbefehlen (SPS-Steuereinheit) getrennt weiter verarbeitet. Die NC- und SPS-Steuereinheiten übermitteln den aktuellen Maschinenstatus zur Visualisierung an die MMC-Steuereinheit.

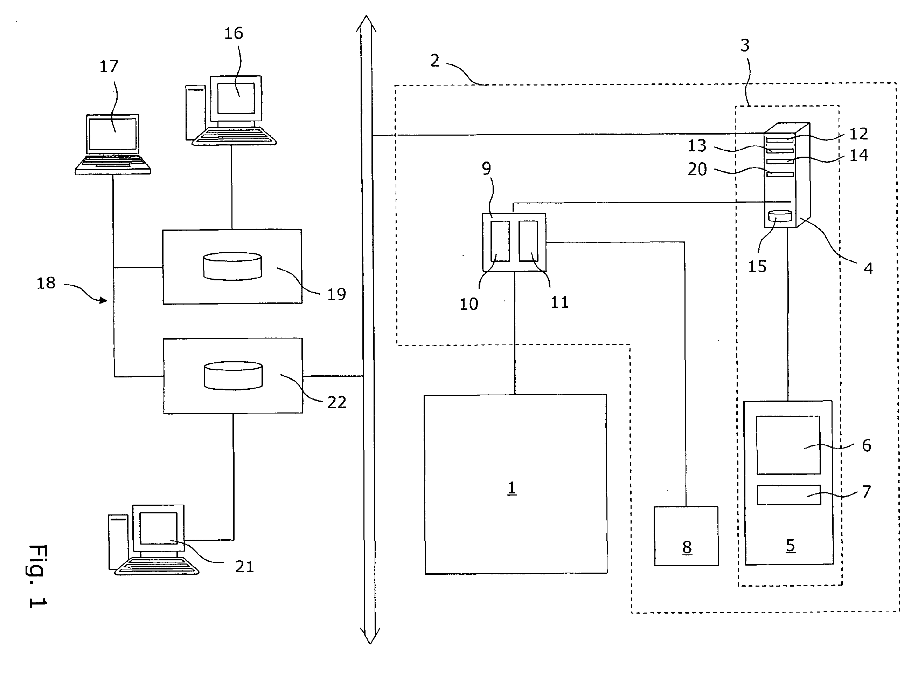

**Fig. 1** zeigt eine bekannte Werkzeugmaschine **1,** die mit Hilfe einer numerischen Steuerungsvorrichtung **2** gesteuert wird. Die Steuerungsvorrichtung 2 umfasst hardwareseitig ein MMC-Bediensystem **3** mit einem als Industrie-PC ausgebildeten Steuerungscomputer **4** und einer Bedieneinrichtung. **5** mit einem Bildschirm **6** als Anzeigeeinheit und einer Eingabeeinheit **7,** die z.B. als Tastatur, Maus oder Touchpanel ausgebildet ist. Weiterhin umfasst die Steuerungsvorrichtung 2 eine Maschinensteuertafel **8** zur manuellen Bedienung der Werkzeugmaschine 1, wobei vor allem sicherheitsrelevante Bedienungen ausgeführt werden, und eine NCU-Baugruppe **9** (Numerical Control Unit) mit integrierter NC-Steuereinheit **10** und SPS-Steuereinheit **11.** Die NC- und SPS-Steuereinheiten 10, 11 können auch als separate Baugruppen ausgebildet sein.

Die Steuerungsvorrichtung 2 umfasst softwareseitig eine Bediensoftware **12** zur Steuerung der Werkzeugmaschine 1, Softwaremodule **13** zur Auftragsverwaltung, Werkzeugverwaltung und Palettenverwaltung, eine Programmverwaltung **14** zur Verwaltung von Steuerprogrammen und einen Datenspeicher **15,** in dem standardmäßige Bearbeitungsparameter für die Steuerprogramme gespeichert sind. Der Begriff "Steuerprogramm" umfasst neben dem NC-Programm sämtliche Technologiedaten, die aus dem NC-Programm in externe Datenspeicher ausgelagert sind. Außerdem können weitere Anwendungen, wie z.B. ein Konstruktionssystem, ein Programmiersystem oder ein kombiniertes Konstruktions- und Programmiersystem, auf dem Steuerungscomputer 4 installiert sein.

An der Herstellung eines Bauteils auf der Werkzeugmaschine 1 sind ein Konstrukteur, ein Programmierer und ein Maschinenbediener beteiligt, die zum Teil in Personalunion von einer oder zwei Personen ausgeübt werden können. Die Konstruktion des Bauteils erfolgt mit Hilfe eines Konstruktionssystems **16** (CAD-System) oder eines kombinierten Konstruktions- und Programmiersystems **17** (CAD-/CAM-System), wobei die Abkürzungen CAD und CAM für Computer Aided Design und Computer Aided Manufacturing stehen. Fertige Konstruktionszeichnungen werden auf einer dafür in einem Netzwerk **18** vorgesehenen gemeinsamen CAD-Datenablage **19** abgelegt, auf die die Programmierer bei Bedarf zugreifen können.

Die Werkzeugmaschine 1 wird über Steuerprogramme gesteuert, die mit Hilfe eines Programmiersystems oder manuell an der Bedieneinrichtung 5 des MMC-Bediensystems 3 erstellt werden. Programmiersysteme kennen grundlegende und spezielle NC-Funktionen und wissen, welche Technologiedaten benötigt werden und welche Regeln für die Bearbeitung gelten. Damit können sie die Bearbeitung automatisch definieren und ein Steuerprogramm generieren. Bei dem in Fig. 1 gezeigten Ausführungsbeispiel sind neben dem kombinierten Konstruktions- und Programmiersystem 17 ein weiteres Programmiersystem oder kombiniertes Konstruktions- und Programmiersystem **20** auf dem Steuerungscomputer 4 und ein Programmiersystem **21** (CAM-System) im Netzwerk 18 installiert. Die Programmiersysteme 17, 20, 21 sind mit einer CAM-Datenablage **22** verbunden, auf die die Programmierer und Maschinenbediener zugreifen können. Der Programmierer legt die fertigen Steuerprogramme in der CAM-Datenablage 22 ab. Der Maschinenbediener kann auf die CAM-Datenablage 22 zugreifen und die Steuerprogramme aus der CAM-Datenablage 22 in die Programmverwaltung 14 des Steuerungscomputers 4 importieren.

Bei der Programmierung legt der Programmierer fest, wie ein Bauteil bearbeitet wird. Er bestimmt, welche Werkzeuge eingesetzt werden, in welcher Reihenfolge die Bearbeitung erfolgt und welche Bearbeitungsparameter z.B. für die Laserleistung und Vorschubgeschwindigkeit gelten. Programmiersysteme unterstützen den Programmierer dabei, geeignete Bearbeitungsparameter und Bearbeitungsstrategien für seine Bearbeitungsaufgabe zu finden. Die Informationen über geeignete Bearbeitungsparameter und Bearbeitungsstrategien sind in sogenannten Technologietabellen und Regelwerken enthalten, die den Datenspeicher 15 definieren. In einer Technologietabelle sind in Abhängigkeit von der Materialart, der Materialdicke und dem Bearbeitungsverfahren geeignete Bearbeitungsparameter für alle relevanten Größen hinterlegt, die eine prozesssichere Bearbeitung ermöglichen. Bei Bedarf werden Technologietabellen in Abhängigkeit weiterer Parameter definiert. Dazu gehört beim Laserschneiden z.B. die Konturgröße, die in klein, mittel und groß unterschieden wird, und der Maschinentyp, auf dem die Bearbeitung erfolgen soll.

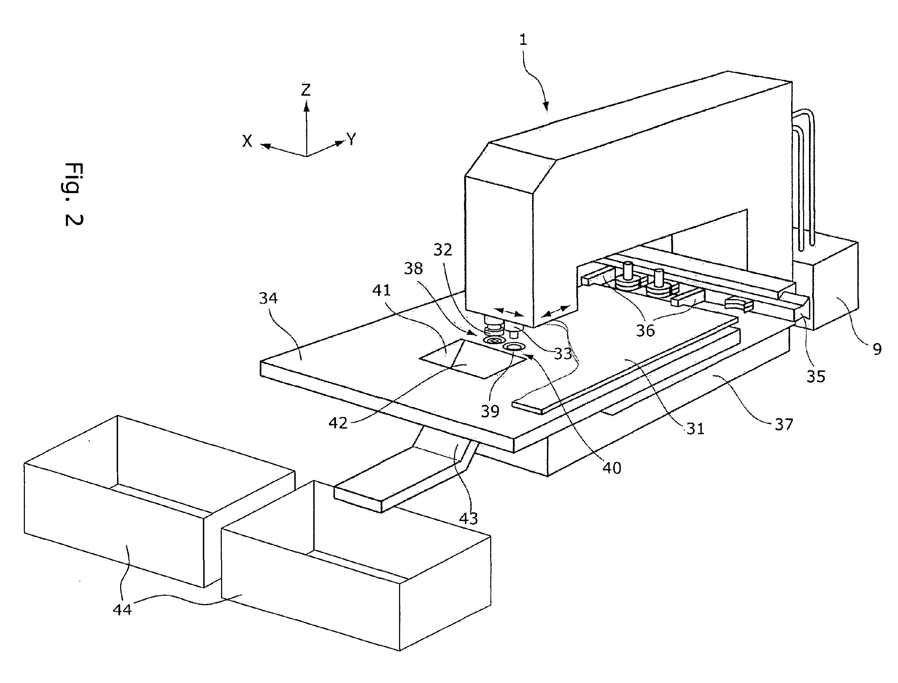

**Fig. 2** zeigt eine als Laser-Stanz-Kombinationsmaschine ausgebildete Werkzeugmaschine 1 nach dem Stand der Technik, welche für das Bearbeiten einer als Werkstück **31** dienenden Blechtafel eine herkömmliche Stanz-Umformvorrichtung **32** und einen Laserbearbeitungskopf **33** als Bearbeitungswerkzeuge aufweist. Das zu bearbeitende Werkstück 31 lagert während der Werkstückbearbeitung auf einem Werkstücktisch **34.** Mittels einer herkömmlichen Halteeinrichtung **35,** welche Klemmen **36** zum Festhalten des Werkstückes 31 aufweist, kann das Werkstück 31 gegenüber der ortsfesten Stanz-Umformvorrichtung 32 und dem Laserbearbeitungskopf 33 entlang einer ersten Bewegungsachse **X** der Blechebene (X-Y-Ebene eines XYZ-Koordinatensystems) verschoben werden. Entlang einer zweiten Bewegungsachse **Y** der Blechebene kann das Werkstück 31 bewegt werden, indem der Werkstücktisch 34 zusammen mit der Halteeinrichtung 35 relativ zu einer Unterlage **37,** auf welcher der Werkstücktisch 34 gelagert ist, mittels einer (nicht gezeigten) herkömmlichen Koordinatenführung verschoben wird.

Das Werkstück 31 lässt sich somit entlang der ersten und zweiten Bewegungsachsen X, Y gegenüber der Stanz-Umformvorrichtung 32 und dem Laserbearbeitungskopf 33 verschieben, sodass der jeweils zu bearbeitende Bereich des Werkstücks 31 in einen Bearbeitungsbereich **38** der Stanz-Umformvorrichtung 32 bzw. einen durch eine im Wesentlichen kreisförmige Öffnung **39** im Werkstücktisch 34 begrenzten Bearbeitungsbereich **40** des Laserbearbeitungskopfs 33 verbracht werden kann. Im Gegensatz zur ortsfesten Stanz-Umformvorrichtung 32 ist der Laserbearbeitungskopf 33 mittels einer (nicht gezeigten) Bewegungseinheit entlang der ersten und zweiten Bewegungsachsen X, Y innerhalb des Bearbeitungsbereiches 40 verschiebbar, wie in Fig. 1 durch zwei Doppelpfeile angedeutet. Weiterhin kann der Laserbearbeitungskopf 33 auch entlang einer dritten Bewegungsachse Z verschoben werden, um eine geeignete Fokuslage für die Blechbearbeitung einzustellen.

Zur Abfuhr von Werkstückausschnitten vom Werkstück 31 nach einem abschließenden Freischneiden ist im Werkstücktisch 34 eine rechteckige Öffnung **41** vorgesehen, welche durch eine bewegbare Klappe **42** öffnen- und schließbar ist, die in Fig. 2 im geöffneten Zustand gezeigt ist. Das Werkstück 31 wird vor dem abschließenden Freischneiden derart positioniert, dass der teilweise freigeschnittene Werkstückausschnitt über der mit der Klappe 42 verschlossenen Öffnung 41 zu liegen kommt. Nach dem abschließenden Freischneiden wird die Klappe 42 geöffnet, und der vollständig freigeschnittene Werkstückausschnitt fällt unter Schwerkraftwirkung durch die Öffnung 42 auf eine Rutsche **43,** von wo aus er aus dem Arbeitsbereich der Werkzeugmaschine 1 abgeführt wird, beispielsweise sortiert in unterschiedliche Abfall- oder Gutteilebehälter **44.**

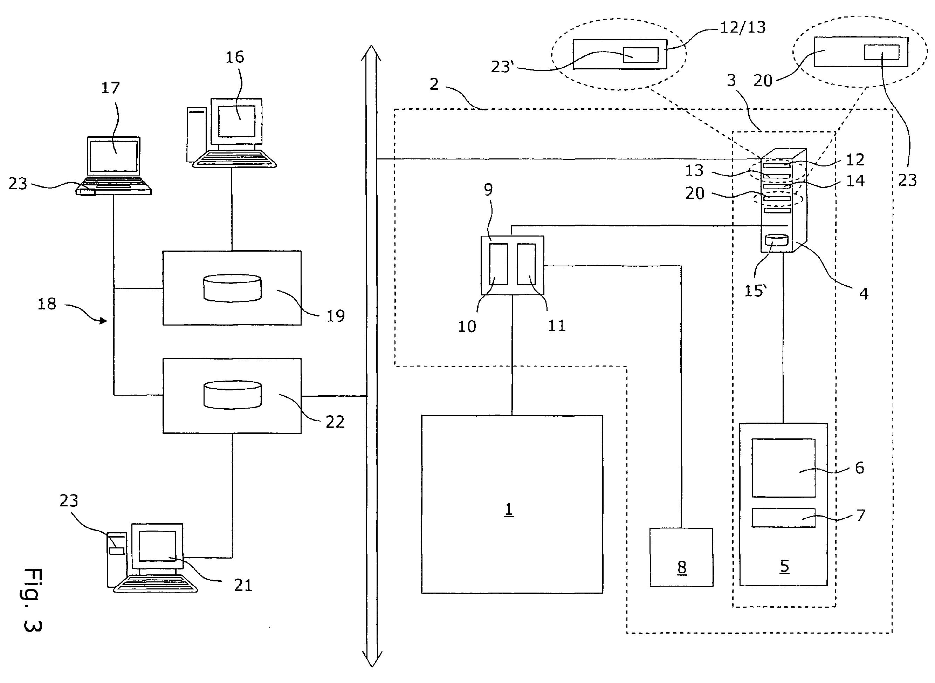

**Fig. 3** zeigt die aus Fig. 1 bekannte Werkzeugmaschine 1 mit erfindungsgemäßen Programmmodulen **23, 23'.** Zur Durchführung des erfindungsgemäßen Verfahrens sind die Programmiersysteme 17, 20, 21 bevorzugt mit einem zusätzlichen Programmmodul 23 ausgestattet, das die erzeugten NC-Programme mit Gewichts- und/oder Volumeninformationen oder Flächeninformationen zu den bearbeiteten Blechtafeln, Gutteilen bzw. Abfall- oder Reststücken ausstattet.

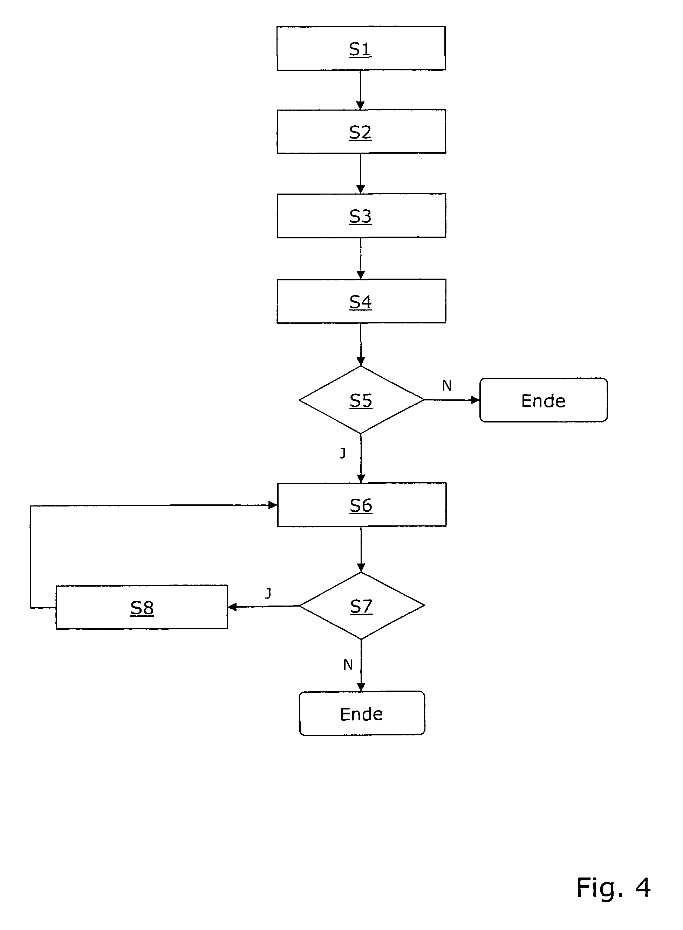

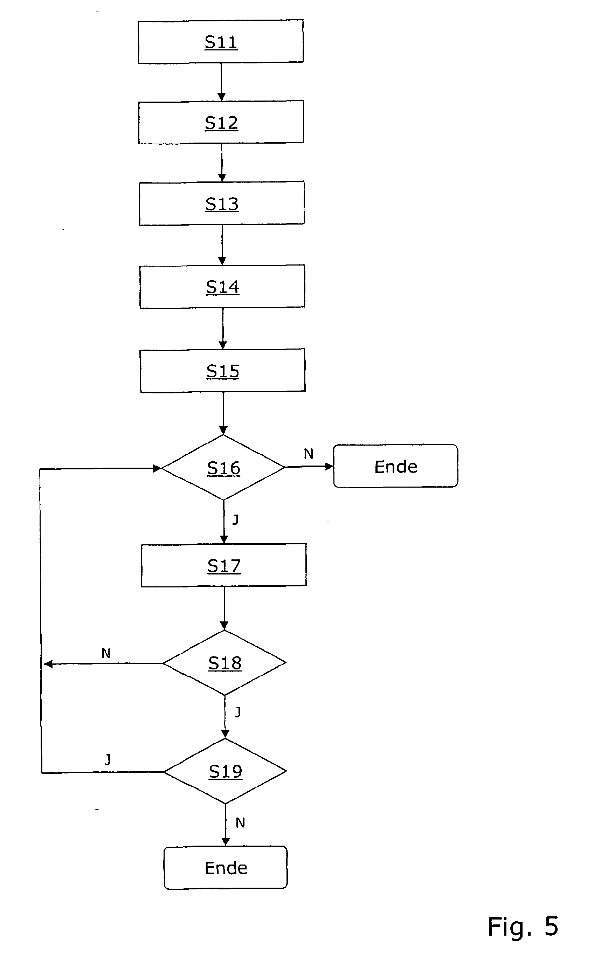

Wenn das NC-Programm lediglich Flächeninformationen enthält, müssen auf dem Steuerungscomputer 4 der Werkzeugmaschine 1 zusätzlich Informationen wie z.B. Materialdichten zur Verfügung stehen, um die Gewichte der bearbeiteten Blechtafeln, Werkstücke etc. exakt zu berechnen. Diese Materialdaten können z.B. in einem erweiterten Datenspeicher **15'** abgelegt werden. Die Materialdaten auf dem Steuerungscomputer 4 abzulegen hat den Vorteil, dass der Bediener auch Blechtafeln aus anderen Materialien als ursprünglich geplant verwenden kann und auf der NCU-Baugruppe 9 nach dem erfindungsgemäßen Verfahren der Fign. 4 und 5 trotzdem korrekt berechnete Gewichte aufaddiert werden. Um die korrekten Gewichte und/oder Volumina zu berechnen, dient in diesem Fall ein Programmmodul 23' in der Bediensoftware 12 und/oder Auftragsverwaltungssoftware 13.

**Fig. 4** zeigt ein erstes Beispiel des erfindungsgemäßen Verfahrens. Dabei wird in einem Schritt S1 von dem CAM-System 21 ein NC-Programm für die Herstellung von einem oder mehreren Gutteilen aus einer Blechtafel erstellt. Dieses NC-Programm enthält bevorzugt Informationen zur Größe der Gutteile bzw. Abfall- oder Reststücke. In einem Schritt S2 berechnet bzw. stellt die Bediensoftware 12 des Steuerungscomputers 4 aus dem NC-Programm und sonstigen übertragenen oder auf der Werkzeugmaschine abgelegten Blechtafelparametern das Gesamtgewicht sowie das Gewicht pro Flächeneinheit der Blechtafel und der zu entladenden Blechteile bereit. Anschließend wird das NC-Programm in einem Schritt S3 von der Bediensoftware 12 zerlegt, d.h. in eine für die NC-Steuereinheit 10 lesbare Form gebracht. In einem Schritt S4 initiiert der Maschinenbediener die Abarbeitung des NC-Programms in der Bediensoftware 12, wodurch das NC-Programm sowie Größe und Gewicht pro Fläche der Blechtafel an die NCU-Baugruppe 9 gesendet werden.

In diesem Beispiel wird in einem Schritt S5 von der NCU-Baugruppe 9 geprüft, ob das Gewicht der Blechtafel einen Grenzwert überschreitet, ab dem die Werkzeugmaschine 1 nicht mehr sicher mit maximaler Bearbeitungsgeschwindigkeit bzw. -beschleunigung betrieben werden kann. Wenn dieser Grenzwert nicht überschritten wird (N in S5), wird die Abarbeitung des NC-Programms wie üblich mit maximaler Dynamik der Werkzeugmaschine 1 durchgeführt, und das erfindungsgemäße Verfahren endet. Falls das Gewicht der Blechtafel zu hoch ist (J in S5) wird das Verfahren in Schritt S6 fortgesetzt. In diesem wird die zu diesem Zeitpunkt an der Werkzeugmaschine 1 maximal zulässige Bearbeitungsgeschwindigkeit und -beschleunigung (auch als Steuerparameter bezeichnet) auf Basis des Blechtafelgewichts festgelegt und damit die Abarbeitung des NC-Programms gestartet. In einem Schritt S7 wird das NC-Programm bis zum nächsten Ausschleusen eines Blechteils (z.B. Gutteil, Abfallteil, Stanzbutzen etc.) abgearbeitet (J in S7) oder bis das NC-Programm endet (N in S7), womit auch das Verfahren endet. Wenn das Blechteil in Schritt S7 entladen wurde (J in S7), wird in Schritt S8 das Gewicht der Resttafel von der NCU-Baugruppe 9 aus den in Schritt S1 oder S2 festgelegten Tafelinformationen ausgelesen oder berechnet. Mit dem ermittelten Gewicht der Resttafel wird das Verfahren in Schritt S6 fortgesetzt.

**Fig. 5** zeigt ein weiteres Ausführungsbeispiel des erfindungsgemäßen Verfahrens. Dabei wird wie in Fig. 4 in einem Schritt S11 von einem CAM-System 21 mindestens ein NC-Programm für die Herstellung eines oder mehrerer Werkstücke aus einer Blechtafel erstellt. Dieses NC-Programm kann Informationen zu Größe oder Gewicht der Werkstücke bzw. Abfall- oder Restteile enthalten. In einem Schritt S12 berechnet bzw. stellt die Bediensoftware 12 des Steuerungscomputers 4 aus dem NC-Programm und sonstigen übertragenen oder auf der Maschine abgelegten Werkstückparametern das Gesamtgewicht sowie das Gewicht pro Flächeneinheit der Blechtafel und der auszuschleusenden Blechteile und/oder deren Volumen bereit. Anschließend wird das als nächstes auszuführende NC-Programm in einem Schritt S13 von der Bediensoftware 12 zerlegt, d.h. in eine für die NC-Steuereinheit 10 lesbare Form gebracht. In einem Schritt S14 initiiert der Maschinenbediener die Abarbeitung des NC-Programms in der Bediensoftware 12, wodurch das NC-Programm sowie die Größe als auch das Gewicht pro Fläche der Blechtafel und/oder das Volumen an die NCU-Baugruppe 9 gesendet werden.

In diesem Ausführungsbeispiel wird in Schritt S15 von der NCU-Baugruppe 9 das NC-Programm bis zum nächsten Entladevorgang eines Blechteils (z.B. Gutteil, Abfallteil, Stanzbutzen etc.) ausgeführt (J in S16). Falls es keinen weiteren Entladevorgang im NC-Programm gibt, wird dieses bis zum Ende abgearbeitet (N in S16), und das Verfahren endet. Wenn das NC-Programm nach Schritt S16 bis zum nächsten Entladevorgang abgearbeitet wurde, wird in Schritt S17 das entsprechende Blechteil entladen und das Gewicht und/oder Volumen des entladenen Blechteils in der NCU-Baugruppe 9 aus den in Schritt S11 oder S12 festgelegten Tafelinformationen ausgelesen bzw. berechnet und in Abhängigkeit zum jeweiligen Abfallbehälter 44 gespeichert. In einem Schritt S18 wird das Gewicht aller Blechteile im zuletzt verwendeten Abfallbehälter 44 berechnet und mit einem behälterabhängig definierten Maximalgewicht und/oder -volumen verglichen. Sollte das Maximalgewicht und/oder -volumen nicht überschritten sein (N in S18), wird das Verfahren bei Schritt S16 weitergeführt. Wenn das Maximalgewicht und/oder -volumen erreicht ist (J in S18), wird in Schritt S19 ein Behälterwechsel oder eine -leerung initiiert, indem ein den Wechsel des Abfallbehälters 44 veranlassender Steuerparameter entsprechend geändert wird. Sollte die Bearbeitung auf Grund des zu hohen Gewichts oder Volumens im Abfallbehälter 44 nicht fortgesetzt werden können (N in S19), stoppt die Abarbeitung des NC-Programms, und das Verfahren endet. Wenn in Schritt S19 durch einen Bediener oder eine Automatisierungseinrichtung der Abfallbehälter 44 geleert oder gewechselt und dies der NCU-Baugruppe 9 mitgeteilt wurde, dann wird der in der NCU-Baugruppe 9 hinterlegte Gewichts- und/oder Volumenwert des entsprechenden Behälters auf Null gesetzt (J in S19), und das Verfahren kann bei Schritt S16 fortgesetzt werden. Alternativ kann der Bediener, wenn der eingewechselte Behälter nicht vollständig entleert war, das Gewicht und/oder Volumen des eingewechselten Behälters 44 auf einen anderen Wert als Null setzen.

In einer alternativen Ausführungsform kann in Schritt S19 geprüft werden, ob es noch eine ausreichende Reserve im Abfallbehälter 44 gibt und ein Behälterwechsel somit noch hinausgezögert werden kann. In diesem Fall wird in der NCU-Baugruppe 9 hinterlegt, dass beim Beenden der Abarbeitung des NC-Programms (N in S16) ein Behälterwechsel initiiert werden soll. Dies kann durch eine Anweisung an den Bediener oder an die Automatisierung der Werkzeugmaschine 1 geschehen.

In einer vereinfachten Ausführungsform wird die in der NCU-Baugruppe 9 gespeicherte Blechteilmenge lediglich am Ende der Abarbeitung eines kompletten NC-Programms mit einem festgelegten Maximalgewicht und/oder Maximalvolumen des Abfallbehälters 44 verglichen und nötigenfalls ein Behälterwechsel initiiert.

In der NCU-Baugruppe 9 kann anstelle bzw. zusätzlich zum Gewicht die Größe (Fläche und/oder Volumen) der Blechteile addiert werden. Dies kann auch gewichtet nach Sperrigkeitsgrad der Blechteile geschehen. Dies hat den Vorteil, dass ein Wechsel des Abfallbehälters 44 auch dann initiiert wird, wenn bei leichten oder sperrigen (z.B. besonders großen oder mit Umformungen ausgestalteten) Blechen/Blechteilen das Maximalgewicht noch nicht erreicht ist, aber der Abfallbehälter 44 auf Grund des hohen Blechteilvolumens voll ist.

Weiterhin ist es möglich, dass die Berechnung von Schritt S12 in obigen Verfahren nicht nur von der Bediensoftware 12 durchgeführt wird. Diese kann auch alleine durch das Auftragsverwaltungssoftwaremodul 13 oder gemeinsam von diesem mit der Bediensoftware 12 durchgeführt werden. Der Vorteil, das Softwaremodul 13 zur Auftragsverwaltung in die Berechnung miteinzubeziehen, liegt darin, dass in diesem bereits NC-Programme und deren Bearbeitungszeiten für die als nächstes anstehenden Aufträge abgelegt oder berechenbar sind. Somit kann, zusammen mit den in der NCU-Baugruppe 9 hinterlegten Gewichten und/oder Volumenwerten der Blechteile in den Abfall- oder Gutteilebehältern 44, berechnet und auf der Anzeigeeinheit 6 angezeigt werden, wie lange es noch dauert, bis ein Behälterwechsel notwendig wird. Dies ist insbesondere dann von Vorteil, wenn der Bediener den Behälterwechsel manuell durchführen muss und somit planen kann, wie viel Zeit ihm für andere Tätigkeiten bleibt. Eine Aktualisierung der Zeitanzeige auf der Anzeigeeinheit 6 kann während den nachfolgenden Schritten S13 bis S19 erfolgen.

In einer weiteren Ausführungsform enthält das in Schritt S11 erstellte NC-Programm Informationen zu den damit herzustellenden Gutteilearten. In Schritt S11 oder S12 kann zusätzlich oder alternativ eine Kommissionierung der verschiedenen Gutteilearten eingegeben werden (z.B. durch Programmierer, Maschinenbediener oder ein Auftragsverwaltungsprogramm), so dass der NCU-Baugruppe 9 in Schritt S14 mitgeteilt wird, welche Gutteilearten in welcher maximalen Anzahl pro Gutteilbehälter entladen werden dürfen. Im Unterschied zu obigem Verfahren kann nun in Schritt S17 zusätzlich oder alternativ die Anzahl der entladenen Gutteile in Abhängigkeit vom verwendeten Gutteilebehälter 44 gespeichert werden. In Schritt S18 kann entsprechend geprüft werden, ob die maximal zulässige Anzahl an Gutteilen erreicht und ein Gutteilebehälterwechsel notwendig ist (J in S18) oder nicht (N in S18).

## Patentansprüche

1. Verfahren zum Bearbeiten eines Werkstücks (31), insbesondere einer Blechtafel, an einer Werkzeugmaschine (1), wobei während der Bearbeitung des Werkstücks (31) mindestens ein den Wechsel mindestens eines Abfall- und/oder Gutteilebehälters (44) der Werkzeugmaschine (1) veranlassender Steuerparameter der Werkzeugmaschine (1) in Abhängigkeit von der während der Bearbeitung vom Werkstück (31) abgeführten Abfall- und/oder Gutteilemenge geändert wird,
**dadurch gekennzeichnet,**
**dass** der zeitliche Verlauf der im Laufe der Bearbeitung des Werkstücks (31) anfallenden Abfall- und/oder Gutteilemenge bereits vor der eigentlichen Bearbeitung ermittelt und im zugehörigen NC-Programm hinterlegt wird und der mindestens eine Steuerungsparameter an der Werkzeugmaschine (1) entsprechend der hinterlegten Abfall- und/oder Gutteilmenge angepasst wird.

2. Verfahren nach Anspruch 1, **dadurch gekennzeichnet, dass** während der Bearbeitung des Werkstücks (31) dessen Geschwindigkeit und/oder Beschleunigung an das während der Bearbeitung abnehmende Werkstückgewicht angepasst wird.

3. Verfahren nach Anspruch 1 oder 2, **dadurch gekennzeichnet, dass** die bei der Bearbeitung von Werkstücken (31) anfallenden Abfall- und/oder Gutteile jeweils nach unterschiedlichen Abfall- und/oder Gutteilearten sortiert in unterschiedliche Abfall- und/oder Gutteilebehälter (44) abgeführt werden und dass während der Bearbeitung der Werkstücke (31) die jeweils einen Wechsel der Abfall- und/oder Gutteilebehälter (44) veranlassenden Steuerparameter an die während der Bearbeitung der Werkstücke (31) jeweils abgeführte Abfall- und/oder Gutteilemenge angepasst wird.

4. Verfahren nach einem der Ansprüche 1 bis 3, **dadurch gekennzeichnet, dass** während der Bearbeitung des Werkstücks (31) dem Bediener ein anstehender Wechsel eines Abfall- und/oder Gutteilebehälters (44), insbesondere die bis zum Wechsel des Abfall- und/oder Gutteilebehälters (44) noch verbleibende Zeit, angezeigt wird.

5. Verfahren nach einem der Ansprüche 1 bis 4, **dadurch gekennzeichnet, dass** das NC-Programm mit Gewichts- und/oder Volumeninformationen oder Flächeninformationen zu den Gut- und/oder Abfallteilen (44) ausgestattet wird.

6. Computerprogrammprodukt (23, 23'), welches Codemittel aufweist, die zum Durchführen aller Schritte des Verfahrens nach einem der vorhergehenden Ansprüche angepasst sind, wenn das Programm auf einer Datenverarbeitungsanlage abläuft.

## Claims

1. Method for processing a workpiece (31), in particular a sheet metal plate, on a machine tool (1), wherein during the processing of the workpiece (31), at least one control parameter of the machine tool (1), which causes the change of at least one waste and/or good component container (44) of the machine tool (1) is changed in accordance with the quantity of waste and/or good components discharged during the processing of the workpiece (31),
**characterized in that** the temporal progress of the quantity of waste and/or good components produced during the processing of the workpiece (31) is already established before the actual processing operation and stored in the associated NC program and the at least one control parameter is adapted at the machine tool (1) in accordance with the stored quantity of waste and/or good components.

2. Method according to claim 1, **characterized in that**, during the processing of the workpiece (31), the speed and/or acceleration thereof is/are adapted to the workpiece weight which decreases during the processing operation.

3. Method according to claim 1 or 2, **characterized in that** the waste and/or good components produced during the processing of workpieces (31) are each sorted according to different waste and/or good component types and discharged into different waste and/or good component containers (44) and **in that**, during the processing of the workpieces (31), the control parameters which in each case causes a change of the waste and/or good components containers (44) are adapted to the quantity of waste and/or good components discharged in each case during the processing of the workpieces (31).

4. Method according to any one of the claims 1 to 3, **characterized in that**, during the processing of the workpiece (31), an impending change of a waste and/or good component container (44), in particular the time still remaining until the change of the waste and/or good component container (44), is indicated to the operator.

5. Method according to any one of the claims 1 to 4, **characterized in that** the NC program is provided with weight and/or volume information or surface information about the good and/or waste components (44).

6. Computer program product (23, 23') which has encoding means which are adapted to carry out all the steps of the method according to any one of the preceding claims, when the program is run on a data processing system.

## Revendications

1. Procédé d'usinage d'une pièce (31), en particulier d'une feuille de tôle, sur une machine-outil (1), selon lequel au moins un paramètre de commande de la machine-outil (1) qui déclenche le changement d'au moins un bac à pièces rebutées et/ou bonnes (44) de la machine-outil (1) est modifié pendant l'usinage de la pièce (31) en fonction de la quantité de pièces rebutées et/ou bonnes évacuées pendant l'usinage de la pièce (31),
**caractérisé en ce**
**que** la variation dans le temps de la quantité de pièces rebutées et/ou bonnes produites au cours de l'usinage de la pièce (31) est déterminée déjà avant l'usinage proprement dit et enregistrée dans le programme CN correspondant, et ledit au moins un paramètre de commande est adapté sur la machine-outil (1) en fonction de la quantité de pièces rebutées et/ou bonnes enregistrée.

2. Procédé selon la revendication 1, **caractérisé en ce que** pendant l'usinage de la pièce (31), sa vitesse et/ou son accélération sont adaptées au poids décroissant de la pièce pendant l'usinage.

3. Procédé selon la revendication 1 ou 2, **caractérisé en ce que** les pièces rebutées et/ou bonnes produites lors de l'usinage de pièces (31) sont évacuées de manière triée dans différents bacs à pièces rebutées et/ou bonnes (44) selon différentes sortes de pièces rebutées et/ou bonnes et que pendant l'usinage des pièces (31), les paramètres de commande qui déclenchent à chaque fois un changement des bacs à pièces rebutées et/ou bonnes (44) sont adaptés à la quantité de pièces rebutées et/ou bonnes évacuée pendant l'usinage des pièces (31).

4. Procédé selon une des revendications 1 à 3, **caractérisé en ce que** pendant l'usinage de la pièce (31), un changement imminent d'un bac à pièces rebutées et/ou bonnes (44), en particulier le temps restant jusqu'au changement du bac à pièces rebutées et/ou bonnes (44), est indiqué à l'opérateur.

5. Procédé selon une des revendications 1 à 4, **caractérisé en ce que** le programme CN est doté d'informations de poids et/ou de volume ou d'informations de surface relatives aux pièces bonnes et/ou rebutées (44).

6. Produit programme d'ordinateur (23, 23') qui présente des moyens de codage qui sont adaptés à l'exécution de toutes les étapes du procédé selon une des revendications précédentes lorsque le programme se déroule sur un système de traitement de données.
